# EUROPÄISCHE PATENTSCHRIFT

(11) **EP 0 571 445 B1**
(45) Veröffentlichungstag und Bekanntmachung des Hinweises auf die Patenterteilung: **08.05.1996**
(21) Anmeldenummer: 92904471.7
(22) Anmeldetag: 13.02.1992
(51) Int. Cl.: C10F 5/06, F01K 23/06

(54) **VERFAHREN ZUR BRAUNKOHLENAUFBEREITUNG FÜR GAS-DAMPF-KOMBIPROZESSE**
PROCESS FOR DRESSING BROWN COAL FOR COMBINED GAS AND STEAM PROCESSES
PROCEDE DE PREPARATION DU LIGNITE POUR DES PROCESSUS COMBINES GAZ-VAPEUR

(30) Priorität: 15.02.1991 DE 4105127
(43) Veröffentlichungstag der Anmeldung: 01.12.1993
(73) Patentinhaber: VEAG VEREINIGTE ENERGIEWERKE AKTIENGESELLSCHAFT, D-12681 Berlin (DE)
(72) Erfinder: KRÖDEL, Bernd, D-7544 Vetschau (DE); SCHNEIDER, Reinhard, D-7501 Kunersdorf (DE)
(74) Vertreter: Zinken-Sommer, Rainer
(86) Internationale Anmeldenummer: DE9200103
(87) Internationale Veröffentlichungsnummer: WO9214803

(56) Entgegenhaltungen:
- DD-A- 281 237
- DE-A- 3 248 372
- DE-A- 3 344 847
- DE-A- 3 907 217
- GB-A- 17 428

## Beschreibung

Die Erfindung betrifft ein Verfahren zur Braunkohlenaufbereitung für Gas-Dampf-Kombiprozesse in Wärmeerzeugungsanlagen.

Bekannt ist eine Anordnung zur Vorstrom-Rohkohletrocknung für Kondensationskraftwerke, wobei die Brüdenkondensationswärme vollständig ausgenutzt und weder eine Brüdenrückverdichtung noch eine separate elektrische Brüdenentstaubung stattfindet und die Trocknung in einem mit Membranrohrwänden als Heizflächen versehenen und mit Anzapfdampf als Heizdampf von der Hauptturbine versorgten Schüttungsschacht durchgeführt und der dabei entstandene Brüden beim Austritt in den Brüdenkanal - also beim Verlassen des Trockners - mittels dampfabreinigbarer Filterwand entstaubt wird (DD-PS 281 237). In 281 237 wird die Brüdenenergie als Sekundärenergie vollständig nur durch Aufteilung in mehrere und qualitativ unterschiedliche Einsatzfälle genutzt, was eine aufwendige Einbindung in das Anlagengesamtkonzept bedingt. Außerdem ist diese Schaltungsanordnung ausschließlich auf einen Kraftwerksblock bezogen, der die Stromerzeugung nur im "reinen" Kondensationsbetrieb durchführt.

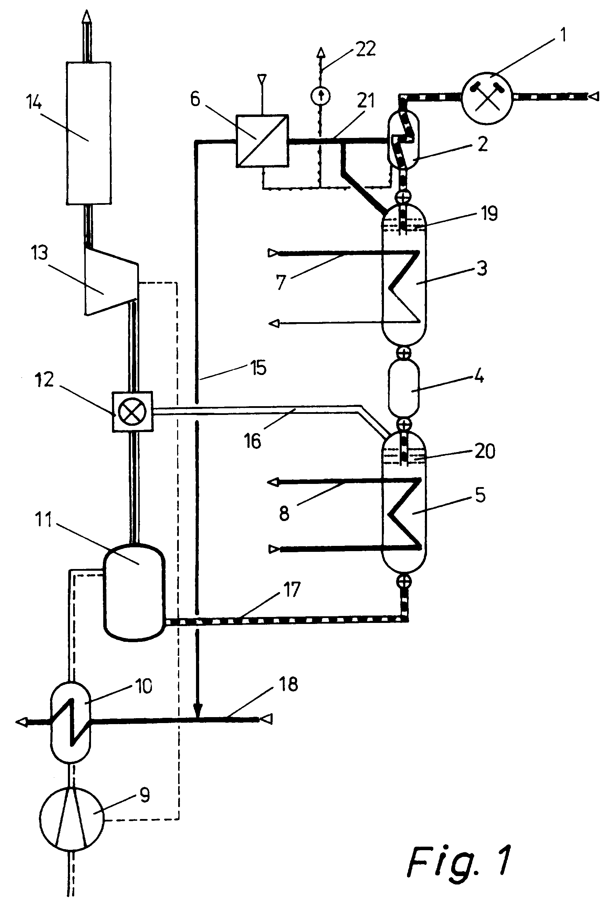

Weiterhin bekannt ist ein Verfahren zum Betreiben eines Gas-Dampf-Kombiprozesses (DE-OS 3907217). Das Verfahren gliedert sich in zwei technologische Konzepte, wobei das in Fig. 1 gezeigte Konzept den Betrieb der Vorschalt-Gasturbine mit Erdgas beinhaltet. Diese Lösung ist trivial und seit Jahren in kommerzieller Nutzung. Das zweite und in Fig. 2 gezeigte Konzept schließt eine Druckwirbelschicht-Kohlevergasung eines Kohleteilstromes ein. Da der Kohleteilstromvergasung noch eine Dampf-Wirbelschicht-Trocknung vorgeschaltet ist, und diese Trocknung nicht im energetischen Verbund mit dem Kombiblock steht, muß diese mit elektroenergieintensiver Brüdenrückverdichtung und externem Brüdenentstauber betrieben werden, so daß dieses Blockkonzept einen niedrigen Wirkungsgrad von 42 - 44 % hat. Der anlagentechnische Aufwand ist sehr groß, da neben der typischen Kombiblockausstattung zusätzlich eine Gasturbinenanlage, eine Zwischenkühlung von Luft, verbindende Rohrleitungen und Kanäle, ein druckaufgeladener Wirbelschicht-Vergasungsreaktor mit zugehörigem Heißgasentstauber und eine elektroenergieverbrauchende Trocknungstechnologie (ohne energetischen Verbund mit dem Kombiblock) notwendig werden.

Der Erfindung liegt die Aufgabe zugrunde, eine deutliche Reduzierung der CO₂-Emission je Nutzleistungseinheit durch verringerten Einsatz fossiler Energieträger zu erreichen, wobei die Trocknungseinrichtungen für Rohbraunkohle so mit der Wärmeerzeugungsanlage verbunden werden, daß eine vollständige energetische Verwertung des Brüdens realisiert wird.

Dies wird erfindungsgemäß dadurch erreicht, daß die Trocknung von Rohbraunkohle und eine Pyrolyse von Trockenbraunkohle in zwei voneinander getrennten Schüttungsschacht-Reaktoren, jedoch in unmittelbarer Abfolge durchgeführt werden, wobei der Trocknungsreaktor mit Sattdampf und der Pyrolyse-Reaktor mit Frischdampf (> 130 bar, > 500 °C) aus einem Dampfkessel mit einer Druck-Wirbelschicht-Feuerung indirekt beheizt werden, der Koks aus dem Pyrolyse-Reaktor in den selben Dampfkessel und das reaktorintern entstaubte Pyrolysegas in einen Zusatzbrenner zur Temperaturerhöhung der Wirbelschicht-Abgase aus gleichem Dampfkessel geleitet werden.

Anhand eines Ausführungsbeispieles soll nachfolgend die Erfindung näher erläutert werden.

Dabei zeigt:
- Fig. 1 -: den Kombiblock mit Schüttungsschachttrockner und Pyrolyse-Reaktor

Die Rohbraunkohle gelangt über die Prallkammermühle 1 in den Vorwärmer 2 und von dort in den Schüttungsschachttrockner 3. Die getrocknete Kohle wird in den unter dem Schüttungsschachttrockner 3 angeordneten Schleusenbehälter 4 geleitet. Unter dem Schleusenbehälter 4 ist der Pyrolyse-Reaktor 5 befindlich. Der im Vorwärmer 2 und im Schüttungsschachttrockner 3 entstehende Brüden wird über Brüdenkanal 21 in den brüdenkondensierenden Sattdampf erzeuger 6 geleitet. Im Schüttungsschachttrockner 3 und im Pyrolyse-Reaktor 5 sind Heizflächen für Heizdampf 7 und für abgekühlten Frischdampf 8 angeordnet. Der Kombiblock weist den Luftverdichter 9 auf, der mit dem luftbeheizten Dampfzwischenüberhitzer 10 verbunden ist. Der Dampfzwischenüberhitzer 10 ist mit dem Dampfkessel 11 mit druckaufgeladener Wirbelschichtfeuerung gekoppelt, der über die Druckleitung 17 ein Trockenkohle-Koks-Pyrolysegas-Gemisch aus dem Pyrolyse-Reaktor 5 bezieht. Mit dem Dampfkessel 11 ist der Zusatzbrenner 12 für Pyrolysegas 16 aus dem Kopfbereich des Pyrolyse-Reaktors 5 verbunden. Der Zusatzbrenner 12 erzeugt Heißgas für die Abgasturbine 13, die mit einer Abhitzeanlage 14 gekoppelt ist. Der Sattdampferzeuger 6 ist über die Sattdampfspeiseleitung 15 mit der kalten Schiene 18 des Dampfzwischenüberhitzers 10 verbunden. Im Kopfteil des Schüttungsschachttrockners 3 ist der Brüdenfilter 19 und im Kopfteil des Pyrolyse-Reaktors 5 der Pyrolysegasfilter 20 angeordnet. Der im Vorwärmer 2 und im Sattdampferzeuger 6 entstehende Brüden wird über die Brüdenkondensatabführung 22 abgeleitet.

Der Vorteil der Erfindung besteht darin, daß mit Aufbereitung der Rohbraunkohle durch Trocknung mit Brüdenenergieverwertung durch Austrieb der flüchtigen Bestandteile und durch Koksbereitstellung ein Gas- und Dampf-Kombiprozeß mit einem Wirkungsgrad von mindestens 50 % dauerhaft und u. a. auch ein Teillastbereich betrieben werden kann.

Besondere technische Vorteile bestehen in der Thermokompression beim Brüden und beim Pyrolysegas, wodurch die Betriebsvolumina wesentlich reduziert werden, was wiederum die reaktorinterne Brüden- bzw. Pyrolysegas-Entstaubung ermöglicht und das Gesamtkonzept des Gas- und Dampf-Kombiblockes ohne zusätzliche Brennergas-Verdichteranlage auskommt.
Die Entstaubung des Pyrolysegases erfolgt mit abreinigbaren keramischen Filterelementen ohne Temperaturabsenkung im Temperaturbereich zwischen 450 und 500 °C. Die flüchtigen Bestandteile der Trockenkohle werden durch indirekte Beheizung mittels Frischdampf ausgetrieben, wodurch eine Aufteilung des mit der Trockenkohle zugeführten Energiestromes in einen Koks- und Pyrolysegas-Mengenstrom ermöglicht und somit ein optimaler Brennstoffeinsatz zum Betrieb von Gas- und Dampf-Kombiprozessen gewährleistet ist.

### Aufstellung der verwendeten Bezugszeichen

1 Prallkammermühle
2 Vorwärmer
3 Schüttungsschachttrockner
4 Schleusenbehälter
5 Pyrolyse-Reaktor
6 Sattdampferzeuger
7 Heizdampf
8 Frischdampf
9 Luftverdichter
10 Dampfzwischenüberhitzer
11 Dampfkessel
12 Zusatzbrenner
13 Abgasturbine
14 Abhitzeanlage
15 Sattdampfspeiseleitung
16 Pyrolysegas
17 Druckleitung
18 kalte Schiene
19 Brüdenfilter
20 Pyrolysegasfilter
21 Brüdenkanal
22 Brüdenkondensatabführung

## Patentansprüche

1. Verfahren zur Braunkohlenaufbereitung für Gas-Dampf-Kombiprozesse, wobei die feuchte Rohbraunkohle über einen Vorwärmer in einen Schüttungsschachttrockner mit indirekter Beheizung und interner Brüdenentstaubung geleitet, der entstandene Brüden in einen brüdenkondensierenden Sattdampferzeuger geführt und einem luftbeheizten Dampfzwischenüberhitzer zugeführt wird,
**gekennzeichnet dadurch,**
daß die Trocknung von Rohbraunkohle und eine Pyrolyse von Trockenbraunkohle in zwei voneinander getrennten Schüttungsschacht-Reaktoren, jedoch in unmittelbarer Abfolge durchgeführt werden, wobei der Trocknungsreaktor mit Sattdampf und der Pyrolyse-Reaktor mit Frischdampf (> 130 bar, > 500 °C) aus einem Dampfkessel mit einer Druck-Wirbelschicht-Feuerung indirekt beheizt werden, der Koks aus dem Pyrolyse-Reaktor in den selben Dampfkessel und das reaktorintern entstaubte Pyrolysegas in einen Zusatzbrenner zur Temperaturerhöhung der Wirbelschicht-Abgase aus gleichem Dampfkessel geleitet werden.

2. Verfahren nach Anspruch 1, gekennzeichnet dadurch, daß der im Pyrolyse-Reaktor abgekühlte Frischdampf in den Dampfkessel mit Druck-Wirbelschicht-Feuerung zurückgeführt, erneut überhitzt und dann zu einer Dampfturbine weitergeleitet wird.

3. Verfahren nach Anspruch 1, gekennzeichnet dadurch, daß die Trockenkohle über druckfeste Zellenradschleusen und über einen Schleusenbehälter in den Pyrolyse-Reaktor eingetragen wird.

4. Verfahren nach Anspruch 1, gekennzeichnet dadurch, daß die Entstaubung des Pyrolysegases im Oberteil des Pyrolyse-Reaktors durchgeführt und das Pyrolysegas infolge Thermokompression unter Druck und staubfrei an die Zusatzbrennkammer abgegeben wird.

## Claims

1. Method for the treatment of lignite for combined gas/steam cycles, wherein the moist raw lignite is passed over a preheater to an indirectly heated bulk shaft drier inside which the vapor is cleaned of dust, the resulting vapors fed into a vapor-condensing saturated steam generator and an air-heated steam reheater,
**characterized in that**
the drying of the raw lignite and pyrolysis of the dry lignite are performed in two separate bulk shaft reactors, albeit in immediate succession, wherein the drying reactor is indirectly heated with saturated steam and the pyrolysis reactor is indirectly heated with main steam (> 130 bar, >500°C) from a steam boiler with a pressurized vortex furnace, the coke from the pyrolysis reactor placed in the same steam boiler, and the pyrolysis gas, cleaned of dust within the reactor, placed in an auxiliary burner to raise the temperature of vortex furnace off-gases from that same steam boiler.

2. Method as claimed in claim 1, **characterized in that** the main steam cooled in the pyrolysis reactor is transferred back to the steam boiler with the pressurized vortex furnace, reheated and exhausted to a steam turbine.

3. Method as claimed in claim 1, **characterized in that** the dry coal is fed to the pyrolysis reactor via a pressure-proof star feeder and via a material lock container.

4. Method as claimed in claim 1, **characterized in that** the dust is removed from the pyrolysis gases in the upper portion of the pyrolysis reactor and that the pyrolysis gas, having been subjected to thermocompression, is transferred, under pressure and free of dust, to the auxiliary burner.

## Revendications

1. Procédé de traitement de lignite, pour processus gaz-vapeur combinés, le lignite brut et humide passant par un réchauffeur dans un séchoir à cuve de déversement, à chauffage indirect et à dépoussiérage interne des buées, les buées obtenues étant amenées à un générateur de vapeur saturée à condensation des buées et à un resurchauffeur à vapeur chauffé à l'air,
caractérisé en ce que le séchage de lignite brut et la pyrolyse de lignite brut et sec sont réalisés, l'un immédiatement après l'autre, dans deux réacteurs à cuve de déversement distincts, le réacteur de séchage étant chauffé indirectement avec de la vapeur saturée et le réacteur à pyrolyse avec de la vapeur fraîche (> 130 bars, > 500 °C) obtenue à partir d'une chaudière à vapeur à foyer à lit fluidisé sous pression, que le coke est transmis depuis le réacteur à pyrolyse à ladite chaudière à vapeur et que le gaz de pyrolyse dépoussiéré à l'intérieur du réacteur est conduit vers un brûleur additionnel pour augmenter la température des gaz perdus du lit fluidisé de ladite chaudière à vapeur.

2. Procédé selon la revendication 1,
caractérisé en ce que la vapeur fraîche refroidie dans le réacteur à pyrolyse rentre dans la chaudière à vapeur avec foyer à lit fluidisé sous pression et qu'elle y est de nouveau surchauffée avant d'être transportée vers une turbine à vapeur.

3. Procédé selon la revendication 1,
caractérisé en ce que le lignite brut entre dans le réacteur à pyrolyse en passant par des écluses à roue cellulaire résistant à la pression et par un réservoir à écluse.

4. Procédé selon la revendication 1,
caractérisé en ce que le dépoussiérage du gaz de pyrolyse a lieu dans la partie supérieure du réacteur à pyrolyse et que le gaz de pyrolyse entre sous pression et sans contenir de poussière, grâce à la compression thermique, dans la chambre de combustion additionnelle.
